# EUROPÄISCHE PATENTSCHRIFT

(11) **EP 4 565 768 B1**
(45) Veröffentlichungstag und Bekanntmachung des Hinweises auf die Patenterteilung: **26.08.2026**
(21) Anmeldenummer: 23734662.2
(22) Anmeldetag: 23.06.2023
(51) Int. Cl.: F01C 17/06, F04C 18/02, F04C 29/00

(54) **SCROLL-VERDICHTER**
SCROLL COMPRESSOR
COMPRESSEUR À SPIRALE

(30) Priorität: 02.08.2022 DE 102022119354
(43) Veröffentlichungstag der Anmeldung: 11.06.2025
(73) Patentinhaber: OET GmbH, 6890 Lustenau (AT)
(72) Erfinder: BUSCH, Christian, 6800 Feldkirch (AT); ÖTTL, Markus, 6890 Lustenau (AT)
(74) Vertreter: Meissner Bolte Partnerschaft mbB
(86) Internationale Anmeldenummer: PCT/EP2023/067170
(87) Internationale Veröffentlichungsnummer: WO 2024/027987

(56) Entgegenhaltungen:
- EP-A1- 1 950 419
- US-A- 5 470 213
- US-A- 5 575 635
- US-A- 5 842 844

## Beschreibung

Die Erfindung betrifft einen Scroll-Verdichter nach dem Oberbegriff des Patentanspruchs 1. Ferner betrifft die Erfindung eine Fahrzeugklimaanlage und ein Kraftfahrzeug mit einem solchen Scroll-Verdichter.

Ein Scroll-Verdichter der eingangs genannten Art ist beispielsweise aus der DE 10 2019 108 417 A1 bekannt. Darin ist ein Scroll-Verdichter beschrieben, der insbesondere geeignet ist, um in Elektrofahrzeugen verwendet zu werden. Bei Elektrofahrzeugen besteht das Problem, dass durch den Wegfall eines Verbrennungsmotors, der bei herkömmlichen Fahrzeugen eingesetzt wird, Geräusche von Nebenaggregaten stärker in den Vordergrund treten. Diese Geräusche werden meist durch Körperschallübertragungen der Nebenaggregate ausgelöst. Dies trifft insbesondere auf Kompressoren von Fahrzeugklimaanlagen zu, die bei herkömmlicher Bauweise in Elektrofahrzeugen hörbar und zudem auch aufgrund ihrer Vibrationen spürbar sind. Es besteht daher ein Bedürfnis, die durch die Nebenaggregate, insbesondere Scroll-Verdichter, erzeugten Vibrationen und Körperschallübertragungen zu reduzieren. Die eingangs genannte DE 10 2019 108 417 A1 stellt dafür eine Lösung bereit, bei welcher Ringe eines sogenannten Pin-Ring-Systems, das die orbitierende Verdrängerspirale führt, durch ein Schmiermittel dämpfend gelagert werden. Obwohl die dämpfende Lagerung bereits zu einer deutlichen Reduktion von Vibrationen und Geräuschemissionen führt, besteht weiterer Verbesserungsbedarf.

Das Dokument US 5 575 635 offenbart einen Spiralverdichter, dessen Grundplatte der sich bewegenden Spirale von vier die Grundplatte in axialer Richtung durchdringenden Stiften geführt wird, welche dabei ein Quadrat aufspannen.

Bei dem bekannten Pin-Ring-System sind die in die Ringe eingreifenden Stifte (Pins) so angeordnet, dass sie ein regelmäßiges Vieleck bilden. Das Vieleck weist Innenwinkel auf, die identisch sind und sich durch nach folgender Formel berechnen lassen: $a = \frac{\left(n-2\right) ⋅ {180}^{0}}{n}$

Vor diesem Hintergrund ist es Aufgabe der vorliegenden Erfindung, einen Scroll-Verdichter anzugeben, der weitere Verbesserungen im Hinblick auf Vibrationsarmut und geräuscharmem Betrieb bietet. Ferner ist es Aufgabe der Erfindung, eine Fahrzeugklimaanlage und ein Kraftfahrzeug mit einem solchen Scroll-Verdichter anzugeben.

Erfindungsgemäß wird diese Aufgabe im Hinblick auf den Scroll-Verdichter durch den Gegenstand des Patentanspruchs 1, im Hinblick auf die Fahrzeugklimaanlage durch den Gegenstand des Patentanspruchs 7 und im Hinblick auf das Kraftfahrzeug durch den Gegenstand des Patentanspruchs 8 gelöst.

So beruht die Erfindung auf dem Gedanken, einen Scroll-Verdichter anzugeben, der ein Gehäuse mit einem Gehäusedeckel und einer Gehäusezwischenwand umfasst, ferner eine elektrische Antriebseinheit aufweist, die durch eine eine Achse aufweisende Antriebswelle mit einem Exzenterlager verbunden ist, sowie eine drehbar um eine exzentrische Achse mit dem Exzenterlager verbundene, bewegliche Verdrängerspirale und eine mit der Verdrängerspirale in Eingriff stehende, unbewegliche Gegenspirale vorsieht. Bei dem Scroll-Verdichter sind die Gehäusezwischenwand und die Verdrängerspirale auf einer Saugseite und der Gehäusedeckel und die Gegenspirale auf einer Hochdruckseite angeordnet. Auf der der Saugseite zugewandten Seite der Verdrängerspirale sind mehrere zylindrische Aussparungen ausgebildet. Auf der der Hochdruckseite zugewandten Seite der Gehäusezwischenwand sind Stifte so angeordnet, dass diese in die zylindrischen Aussparungen hineinragen und mit diesen zusammenwirken, so dass eine Führung für die bewegliche Verdrängerspirale gebildet ist. Vorzugsweise ist in den zylindrischen Aussparungen jeweils ein den Stift umgebendes Ringelement angeordnet.

Erfindungsgemäß spannen die Stifte ein gedachtes Polygon auf, wobei sich wenigstens ein Innenwinkel des Polygons von einem anderen der Innenwinkel und, optional, von 120° unterscheidet. Insbesondere ist bei der erfindungsgemäßen Variante, bei welcher sich ein Innenwinkel von wenigstens einem anderen der Innenwinkel unterscheidet, die oben angegebene Gleichung 1 nicht gültig.

Im Wesentlichen sind bei der Erfindung die Stifte folglich asymmetrisch verteilt. Dabei hat sich gezeigt, dass eine solche asymmetrische Verteilung der Stifte zu geringeren Resonanzen bzw. Vibrations-Überhöhungen führt. Damit werden Geräuschemissionen eines Scroll-Verdichters merklich reduziert. Der Scroll-Verdichter eignet sich so besonders als laufruhiges Aggregat einer Fahrzeugklimaanlage für Elektrofahrzeuge.

Die Transformation vom Verbrennungsmotor zum Elektroantrieb bei heutigen Kraftfahrzeugen führt außerdem dazu, dass im Fahrzeug Bauraum eingespart wird. Elektromotoren benötigen schlichtweg weniger Bauraum als Verbrennungsmotoren, so dass Nebenaggregate größer gestaltet werden können. Der nun verfügbare Bauraum erlaubt es auch, größere Scroll-Verdichter einzusetzen, so dass die Anzahl von Stiften und zugehörigen Ringelementen erhöht werden kann. Insbesondere können nicht nur drei, vier oder fünf Stifte vorgesehen sein. Vielmehr ist es denkbar, dass sieben, acht, neun oder mehr Stifte vorgesehen sind. Eine Erhöhung der Stiftanzahl führt unmittelbar auch zu einer erhöhten Laufruhe, was eine weitere Reduktion von Geräuschemissionen bewirkt.

Bei einer bevorzugten Ausführungsform der Erfindung sind die Aussparungen und/oder die Stifte, insbesondere die Ringelemente, mit einem nichtmetallischen Werkstoff, bevorzugt Kunststoff, versehen und/oder berühren diesen. Auf diese Weise werden zusätzlich Vibrationen reduziert, insbesondere wenn der nichtmetallische Werkstoff Dämpfungseigenschaften aufweist. Geeignete Kunststoffe können eine solche Dämpfung gut bewirken.

Bei dem Scroll-Verdichter ist erfindungsgemäß vorgesehen, dass ein Paar aus benachbarten Stiften einen Stiftpaarwinkel um die Achse der Antriebswelle aufspannt, wobei sich der Stiftpaarwinkel eines Paars von dem Stiftpaarwinkel wenigstens eines anderen Paars unterscheidet. Insbesondere kann der Stiftpaarwinkel eines Paars gegenüber dem Stiftpaarwinkel wenigstens eines anderen Paars um wenigstens 1%, insbesondere um wenigstens 2%, insbesondere um wenigstens 5%, insbesondere um wenigstens 10%, insbesondere um wenigstens 20%, insbesondere um wenigstens 40%, insbesondere um wenigstens 50% größer oder kleiner sein.

Ferner kann vorgesehen sein, dass die Stifte auf wenigstens zwei im Durchmesser unterschiedlich großen Teilkreisen um die Achse der Antriebswelle angeordnet sind. Dabei kann insbesondere ein zweiter Teilkreis um wenigstens 1%, insbesondere um wenigstens 2%, insbesondere um wenigstens 5%, insbesondere um wenigstens 10%, insbesondere um wenigstens 20%, insbesondere um wenigstens 40%, insbesondere um wenigstens 50% größer oder kleiner als ein erster Teilkreis sein. Die unterschiedlichen Stiftpaarwinkel und/oder die unterschiedlichen Teilkreise haben eine asymmetrische Anordnung der Stifte zur Folge, die sich in der Praxis als besonders vibrationsreduzierend gezeigt hat. Diese spezielle Anordnung von Stiften und zugehörigen Aussparungen trägt maßgeblich zur Reduktion von Geräuschemissionen bei.

Bei einer weiteren bevorzugten Ausführungsform weist der Scroll-Verdichter einen die Antriebswelle umgebenden, insbesondere zwölf Stator-Nuten aufweisenden, Stator, einen Rotor mit, insbesondere zehn, Rotor-Polpaaren und vorzugsweise sieben Stifte auf. Eine solche Konfiguration hat sich als besonders wirkungsvoll gezeigt, um Vibrationen und Geräuschemissionen zu reduzieren.

Besonders vorteilhaft ist es in diesem Zusammenhang, wenn die Anzahl von Stator-Nuten oder Rotor-Polpaaren nur mit Rest durch die Anzahl der Stifte teilbar ist.

Alternativ kann vorgesehen sein, dass der Stator 12 Stator-Nuten und der Rotor acht Rotor-Polpaare aufweist.

Ein nebengeordneter Aspekt der Erfindung betrifft eine Fahrzeugklimaanlage mit einem zuvor beschriebenen Scroll-Verdichter. Ein weiterer nebengeordneter Aspekt bezieht sich auf ein Kraftfahrzeug mit einer solchen Fahrzeugklimaanlage. Das Kraftfahrzeug kann vorzugsweise einen wenigstens teilweise elektrischen Fahrzeugantrieb aufweisen.

Die Erfindung wird im Folgenden anhand von Ausführungsbeispielen unter Bezugnahme auf die beigefügten, schematischen Zeichnungen näher erläutert. Darin zeigen
- Fig. 1: eine Längsschnittansicht durch einen erfindungsgemäßen Scroll-Verdichter nach einem bevorzugten Ausführungsbeispiel;
- Fig. 2: eine Querschnittsansicht durch eine bewegliche Verdrängerspirale eines erfindungsgemäßen Scroll-Verdichters nach Fig. 1, wobei die Stifte auf Teilkreisen mit unterschiedlichem Durchmesser angeordnet sind;
- Fig. 3: eine Querschnittsansicht durch eine Verdrängerspirale eines erfindungsgemäßen Scroll-Verdichters nach einem weiteren Ausführungsbeispiel, wobei die Stifte ein Polygon aufspannen, das unterschiedliche Innenwinkel aufweist;
- Fig. 4: eine Querschnittsansicht durch eine Verdrängerspirale eines erfindungsgemäßen Scroll-Verdichters mit vier Stiften, die ein Polygon mit unterschiedlichen Innenwinkeln aufspannen;
- Fig. 5: eine Querschnittsansicht durch eine Verdrängerspirale eines erfindungsgemäßen Scroll-Verdichters nach einem weiteren bevorzugten Ausführungsbeispiel, wobei vier Stifte vorgesehen sind, von welchen ein Stift auf einem anderen Teilkreisdurchmesser angeordnet ist; und
- Fig. 6: eine Querschnittsansicht eines Beispiels einer Verdrängerspirale eines Scroll-Verdichters welcher nicht Teil der beanspruchten Erfindung ist, wobei vier Stifte vorgesehen sind, die ein Polygon mit Innenwinkeln aufspannen, die jeweils von 120° verschieden sind.

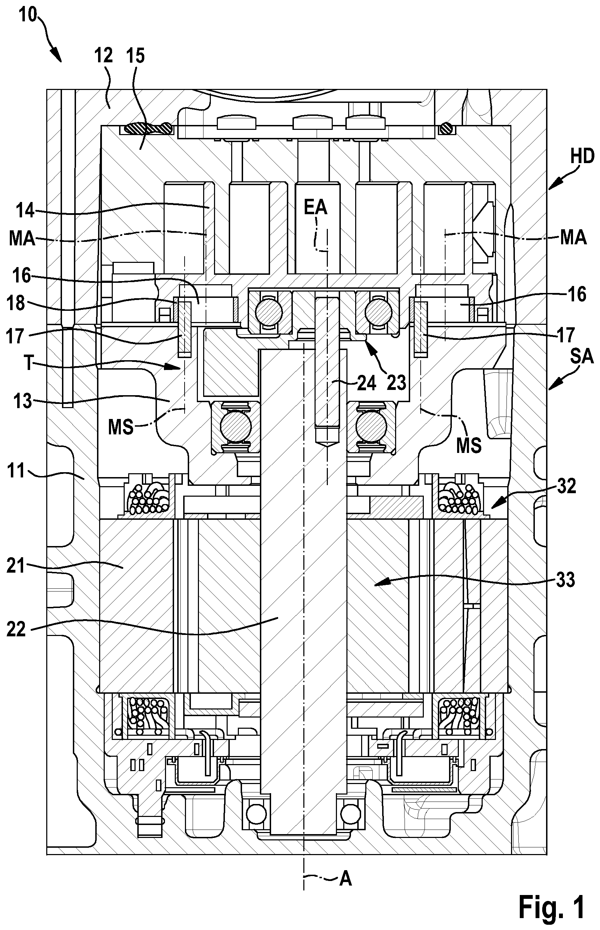

Fig. 1 zeigt einen Scroll-Verdichter 10, der ein Gehäuse 11 mit einem Gehäusedeckel 12 und einer Gehäusezwischenwand 13 aufweist. Die Gehäusezwischenwand 13 erstreckt sich über den Innendurchmesser des Gehäuses 10.

Innerhalb des Gehäuses 10 ist eine elektrische Antriebseinheit 21 angeordnet, die einen Elektromotor mit einem Stator 32 und einem Rotor 33 umfasst. Der Rotor 33 ist mit einer Antriebswelle 22 drehfest verbunden. Die Antriebswelle 22 erstreckt sich durch die Gehäusezwischenwand 13 hindurch und weist eine Achse A auf. Die Antriebswelle 22 ist ferner über einen Exzenterbolzen 24 mit einem Exzenterlager 23 verbunden. Das Exzenterlager 23 umfasst eine Achse EA, die zur Achse A der Antriebswelle 22 exzentrisch angeordnet ist und daher als exzentrische Achse EA bezeichnet wird.

Das Exzenterlager 23 ist in einer Verdrängerspirale 14 befestigt, so dass das Exzenterlager 23 die Verdrängerspirale 14 trägt. Die Verdrängerspirale 14 ist beweglich und greift in eine unbewegliche Gegenspirale 15 ein.

Der Scroll-Verdichter 10 umfasst im Allgemeinen eine Hochdruckseite HD und eine Saugseite SA. Die Verdrängerspirale 14 trennt die Saugseite SA, in welcher auch die Antriebseinheit 21 angeordnet ist, von der Hochdruckseite HD, die im Wesentlichen die Gegenspirale 15 umfasst.

Auf der der Saugseite SA zugewandten Seite der Verdrängerspirale 14 sind mehrere zylindrische Aussparungen 16 ausgebildet. Wie in Fig. 1 gut erkennbar ist, ist in jeder der Aussparungen 16 ein Ringelement 18 eingebettet. Das Ringelement 18 bildet im Wesentlichen eine zylinderförmige Gleitfläche für einen Stift 17, der in die Aussparung 16 eingreift. Insgesamt sind mehrere Stifte 17 vorgesehen, die drehfest mit der Gehäusezwischenwand 13 verbunden sind und in die Aussparungen 16 so eingreifen, dass sie entlang der Innenflächen der Ringe 18 geführt werden. Diese Kombination aus Stiften 17 und Ringelementen 18 bildet eine Führung für die Verdrängerspirale 14, wodurch sichergestellt ist, dass die Verdrängerspirale 14 aufgrund ihrer exzentrischen Anregung über das Exzenterlager 23 eine orbitierende Bewegung ausführt.

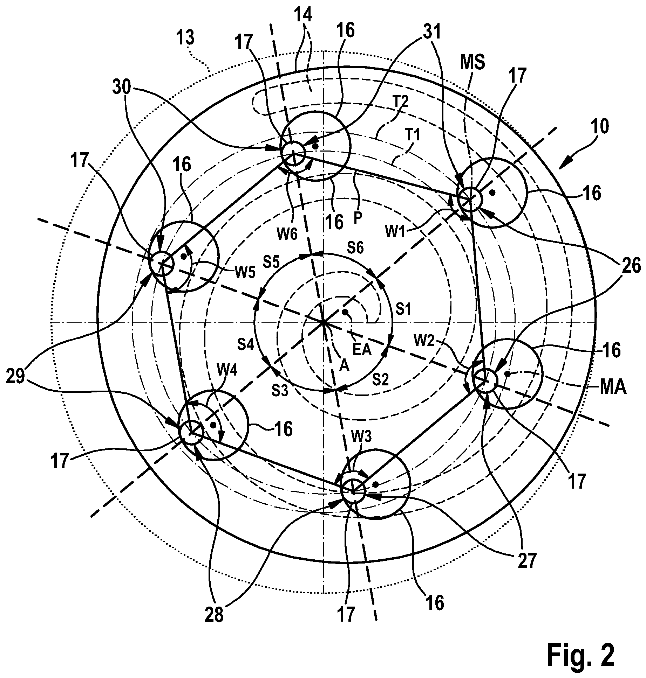

Fig. 2 zeigt in einer Querschnittsansicht die Anordnung der Stifte 17 innerhalb der Aussparungen 16 in der Verdrängerspirale 14. Konkret ist eine Querschnittsansicht durch die Verdrängerspirale 14 gezeigt. Eine punktierte Linie deutet außerdem die in der Ansicht hinterhalb der Verdrängerspirale 14 liegende Gehäusezwischenwand 13 an. Es ist erkennbar, dass die Verdrängerspirale 14 exzentrisch auf der Gehäusezwischenwand 13 gleitet.

Für alle Ausführungsbeispiele gilt, dass die Stifte 17 ein virtuelles Polygon P aufspannen, das in den jeweiligen Zeichnungen symbolhaft dargestellt ist. Das Polygon P umfasst Innenwinkel W1, W2, W3, W4, W5, W6. Jeweils zwei benachbarte Stifte 17 bilden ein Paar 26 bis 31, wobei jedes Paar einen Stiftpaarwinkel S1 bis S6 um die Achse A der Antriebswelle 22 aufspannt. Die Ecken des Polygons P liegen jeweils auf einer Mittelachse MS des Stifts 17.

Ebenso gilt für alle Ausführungsbeispiele, dass der Stift 17 in der jeweiligen Aussparung 16 außermittig angeordnet ist. Insbesondere gleitet der Stift 17 entlang einer Innenwand eines Ringelements 18, das innerhalb der Aussparung 16 angeordnet ist. Die Aussparung 16 weist insoweit eine Mittelachse MA auf, die vorzugsweise in jedem Zustand des Scroll-Verdichters parallel zu, jedoch nicht deckungsgleich mit, der Mittelachse des Stifts 17 angeordnet ist.

Die Ausführungsbeispiele gemäß Fig. 2 bis 6 unterscheiden sich in der konkreten Anzahl und Anordnung der Stifte 17.

So ist bei dem Ausführungsbeispiel gemäß Fig. 2 vorgesehen, dass fünf der sechs Stifte 17 auf einem ersten Teilkreis T1 mit einem ersten Durchmesser und der sechste Stift 17 auf einem zweiten Teilkreis T2 mit einem zweiten Durchmesser angeordnet ist. Der zweite Durchmesser ist größer als der erste Durchmesser. Diese Anordnung hat zur Folge, dass das Polygon P, hier ein Sechseck, nicht mehr regelmäßig ist, sondern unterschiedliche Innenwinkel W1 bis W6 aufweist. Insbesondere sind die Innenwinkel W1, W2 und W6 größer als die Innenwinkel W3, W4, W5.

Die Stiftpaarwinkel S1 bis S6 können hingegen gleich sein. Im Wesentlichen kann also vorgesehen sein, dass der Stift 17, der auf dem Teilkreis T2 liegt, mit einem gegenüberliegenden Stift 17 auf dem Teilkreis T1 eine Symmetrielinie für die verbleibenden vier Stifte 17 bildet. Insgesamt besteht jedoch eine Asymmetrie insofern, als die Stifte 17 nicht alle auf demselben Teilkreis T1, T2 angeordnet sind. Diese Art von Asymmetrie bewirkt den erfindungsgemäßen Vorteil, wonach Vibrationen und Körperschallübertragungen beim Betrieb des Scrollverdichters reduziert werden.

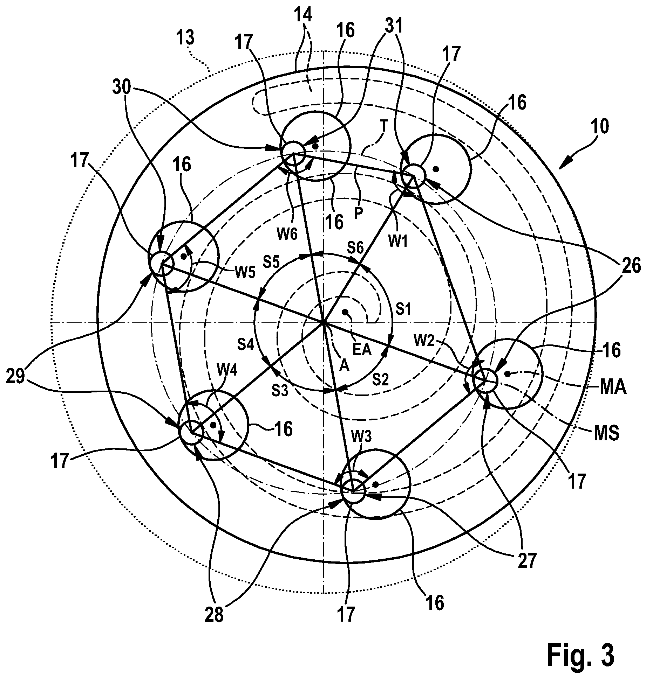

Bei dem Ausführungsbeispiel gemäß Fig. 3 sind ebenfalls sechs Stifte 17 vorgesehen. Die Stifte 17 sind auch auf demselben Teilkreis T angeordnet. Sie spannen dennoch ein unregelmäßiges Polygon P auf, da sich die Stiftpaarwinkel S1-S6 unterscheiden. So bilden zwei Stifte 17 ein Stiftpaar 26, welches um die Achse A der Antriebswelle 22 einen ersten Stiftpaarwinkel S1 aufspannt. Der erste Stiftpaarwinkel S1 ist größer als beispielsweise der Stiftpaarwinkel S4, der von dem gegenüberliegenden Stiftpaar 29 um die Achse A der Antriebswelle 22 aufgespannt wird. Auch eine solche asymmetrische Anordnung von Stiften 17 hat eine deutliche Reduktion von Vibrationen und Geräuschemissionen bei Scroll-Verdichtern gezeigt.

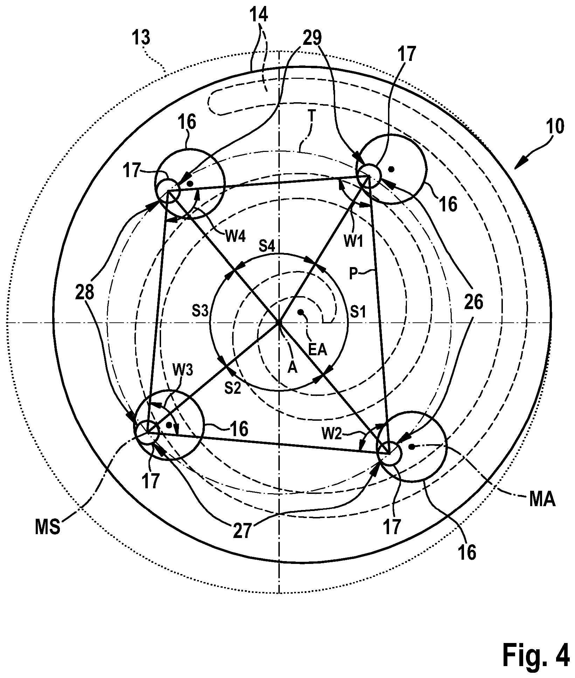

Bei dem Ausführungsbeispiel gemäß Fig. 4 sind vier Stifte 17 vorgesehen, die in entsprechenden vier Ausnehmungen 16 geführt sind. Die Stifte 17 spannen mit ihren Mittelachsen MS ein Polygon P auf, das unregelmäßig ist. Insbesondere bildet das Polygon P ein unregelmäßiges Viereck. Es ist erkennbar, dass alle Stifte 17 bei dem Ausführungsbeispiel gemäß Fig. 4 auf demselben Teilkreis T angeordnet sind. Allerdings weisen die jeweiligen Stiftpaare 26 bis 29 zum Teil unterschiedliche Stiftpaarwinkel S1 bis S4 auf. Insbesondere das erste Stiftpaar 26 spannt mit der Achse A der Antriebswelle 22 einen ersten Stiftpaarwinkel S1 auf, der größer als die übrigen Stiftpaarwinkel S2 bis S4 ist.

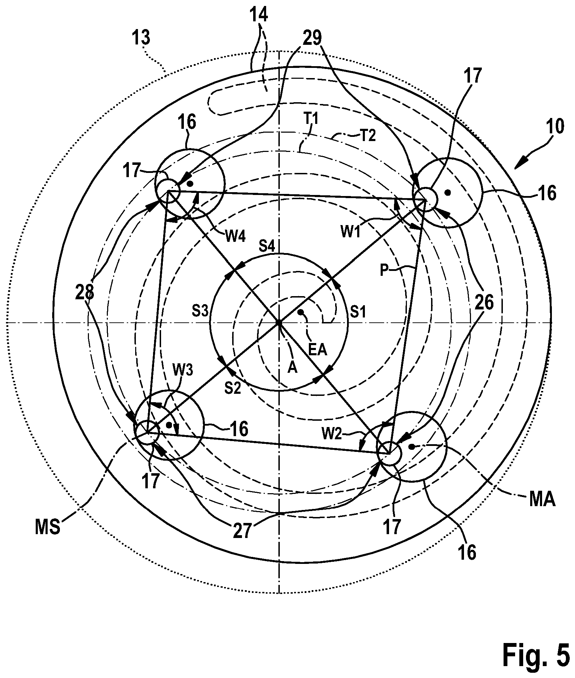

Eine alternative Positionierung von Stiften 17 ist bei dem Ausführungsbeispiel gemäß Fig. 5 gezeigt. Auch hier sind vier Stifte 17 vorgesehen, die jeweils in einer Aussparung 16 geführt sind. Die Stifte 17 spannen mit ihren Mittelachsen MS ein unregelmäßiges Viereck auf, wobei sich die Unregelmäßigkeit bei dem Ausführungsbeispiel gemäß Fig. 5 dadurch ergibt, dass ein Stift 17 auf einem anderen Teilkreis T2 angeordnet ist als die übrigen Stifte 17. Konkret sind drei der Stifte 17 auf einem ersten Teilkreis T1 angeordnet, wobei der erste Teilkreis T1 sich konzentrisch um die Achse A der Antriebswelle 22 erstreckt und einen ersten Teilkreisdurchmesser aufweist. Der zweite Teilkreis T2 weist einen zweiten Teilkreisdurchmesser auf, der größer als der erste Teilkreisdurchmesser ist. Einer der vier Stifte 17 ist auf dem zweiten Teilkreis T2 angeordnet.

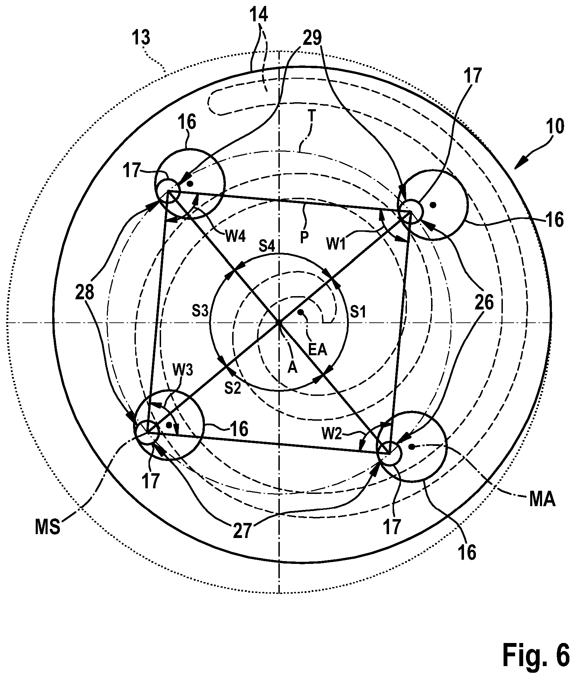

Fig. 6 zeigt ein zusätzliches, nicht in den Umfang der Ansprüche fallendes Ausführungsbeispiel eines Scroll-Verdichters 10, wobei der Scroll-Verdichter 10 ebenfalls vier Stifte 17 aufweist, deren Mittelachsen MS ein Polygon P aufspannen. Das Polygon P ist jedoch als regelmäßiges Polygon ausgebildet. Konkret ist das Polygon P als Quadrat ausgebildet. Entscheidend ist jedoch für die Geräuschminimierung und Vibrationsreduktion, dass der Innenwinkel des Polygons P von 120° abweicht. Es hat sich gezeigt, dass bereits eine solche Abweichung zu einem ruhigeren Lauf des Scroll-Kompressors führt.

### Bezugszeichenliste

- 10: Scroll-Verdichter
- 11: Gehäuse
- 12: Gehäusedeckel
- 13: Gehäusezwischenwand
- 14: Verdrängerspirale
- 15: Gegenspirale
- 16: Aussparung
- 17: Stift
- 18: Ringelement
- 21: Antriebseinheit
- 22: Antriebswelle
- 23: Exzenterlager
- 24: Exzenterbolzen
- 26 - 31: Stiftpaar
- 32: Stator
- 33: Rotor
- HD: Hochdruckseite
- SA: Saugseite
- A: Achse
- EA: Exzentrische Achse
- MA: Mittelachse der Aussparung 16
- MS: Mittelachse des Stifts 17
- P: Polygon, aufgespannt von Stiften 17
- S1 - S6: Stiftpaarwinkel
- T, T1, T2: Teilkreis um die Achse A
- W1 - W6: Innenwinkel des Polygons

## Patentansprüche

1. Scroll-Verdichter (10), umfassend ein Gehäuse (11) mit einem Gehäusedeckel (12) und einer Gehäusezwischenwand (13), eine elektrische Antriebseinheit (21), die durch eine eine Achse (A) aufweisende Antriebswelle (22) mit einem Exzenterlager (23) verbunden ist, eine drehbar um eine exzentrische Achse (EA) mit dem Exzenterlager (23) verbundene, bewegliche Verdrängerspirale (14), und eine mit der Verdrängerspirale (14) in Eingriff stehende, unbewegliche Gegenspirale (15); wobei
- die Gehäusezwischenwand (13) und die Verdrängerspirale (14) auf einer Saugseite (SA) und der Gehäusedeckel (12) und die Gegenspirale (15) auf einer Hochdruckseite (HD) angeordnet sind,
- auf der der Saugseite (SA) zugewandten Seite der Verdrängerspirale (14) mehrere zylindrische Aussparungen (16) ausgebildet sind, und
- auf der der Hochdruckseite (HD) zugewandten Seite der Gehäusezwischenwand (13) Stifte (17) derart angeordnet sind, dass diese in die zylindrischen Aussparungen (16) hineinragen und mit diesen zusammenwirken, so dass eine Führung für die bewegliche Verdrängerspirale (14) gebildet ist, und, vorzugsweise,
- in den zylindrischen Aussparungen (16) jeweils ein den Stift (17) umgebendes Ringelement (18) angeordnet ist,
**dadurch gekennzeichnet, dass**
die Stifte (17) ein gedachtes Polygon (P) aufspannen, wobei sich wenigstens ein Innenwinkel (W1, W2, W3, W4, W5, W6) des Polygons (P) von einem anderen der Innenwinkel (W1, W2, W3, W4, W5, W6) unterscheidet, wobei
ein Paar (26-31) aus benachbarten Stiften (17) einen Stiftpaarwinkel (S1-S6) um die Achse (A) der Antriebswelle (22) aufspannt, wobei sich der Stiftpaarwinkel (S1-S6) eines Paars (26-31) von dem Stiftpaarwinkel (S1-S6) wenigstens eines anderen Paars (26-31) unterscheidet, insbesondere um wenigstens 1%, 2%, 5%, 10%, 20%, 40% oder 50% größer oder kleiner ist.

2. Scroll-Verdichter (10) nach Anspruch 1,
**dadurch gekennzeichnet, dass**
drei, vier, fünf, sieben, acht, neun oder mehr Stifte (17) vorgesehen sind.

3. Scroll-Verdichter (10) nach Anspruch 1 oder 2,
**dadurch gekennzeichnet, dass**
die Aussparungen (16) und/oder die Stifte (17), insbesondere die Ringelemente (18), mit einem nichtmetallischen Werkstoff, bevorzugt Kunststoff, versehen sind oder diesen berühren.

4. Scroll-Verdichter (10) nach einem der voranstehenden Ansprüche,
**dadurch gekennzeichnet, dass**
die Stifte (17) auf wenigstens zwei im Durchmesser unterschiedlich großen Teilkreisen (T1, T2) um die Achse (A) der Antriebswelle (22) angeordnet sind, wobei insbesondere der zweite Teilkreis (T2) um wenigstens 1%, 2%, 5%, 10%, 20%, 40% oder 50% größer oder kleiner als der erste Teilkreis (T1) ist.

5. Scroll-Verdichter (10) nach einem der voranstehenden Ansprüche,
**gekennzeichnet durch**
einen die Antriebswelle (22) umgebenden, insbesondere zwölf Stator-Nuten aufweisenden, Stator (32), einen Rotor (33) mit, insbesondere zehn, Rotor-Polpaaren, und vorzugsweise sieben Stifte (17).

6. Scroll-Verdichter (10) nach Anspruch 5,
**dadurch gekennzeichnet, dass**
die Anzahl an Stator-Nuten oder Rotor-Polpaaren nur mit Rest durch die Anzahl der Stifte (17) teilbar ist.

7. Fahrzeugklimaanlage,
**gekennzeichnet durch**
einen Scroll-Verdichter (10) nach einem der Ansprüche 1 bis 6.

8. Kraftfahrzeug,
**gekennzeichnet durch**
eine Fahrzeugklimaanlage nach Anspruch 7.

9. Kraftfahrzeug nach Anspruch 8,
welches einen wenigstens teilweise elektrischen Fahrzeugantrieb aufweist.

## Claims

1. A scroll compressor (10) comprising a housing (11) with a housing cover (12) and an intermediate housing wall (13), an electric drive unit (21), which is connected with an eccentric bearing (23) by a drive shaft (22) having an axis (A), a movable displacement coil (14) connected with the eccentric bearing (23) so that it can rotate around an eccentric axis (EA), and an immovable counter-coil (15) that engages with the displacement coil (14); wherein
- the intermediate housing wall (13) and the displacement coil (14) are arranged on a suction side (SA) and the housing cover (12) and the counter-coil (15) are arranged on a high-pressure side (HD),
- several cylindrical recesses (16) are formed on the side of the displacement coil (14) facing the suction side (SA), and
- pins (17) are arranged on the side of the intermediate housing wall (13) facing the high pressure side (HD), such that they extend into the cylindrical recesses (16) and interact with them, thereby forming a guide for the movable displacement coil (14), and preferably
- a respective ring element (18) that envelops the pin (17) is arranged in the cylindrical recesses (16),
**characterized in that**
the pins (17) form an imaginary polygon (P), wherein at least one interior angle (W1, W2, W3, W4, W5, W6) of the polygon (P) differs from another interior angle (W1, W2, W3, W4, W5, W6), wherein
a pair (26-31) of neighboring pins (17) forms a pin pair angle (S1-S6) around the axis (A) of the drive shaft (22), wherein the pin pair angle (S1-S6) of one pair (26-31) differs from the pin pair angle (S1-S6) of at least one other pair (26-31), in particular is at least 1%, 2%, 5%, 10%, 20%, 40% or 50% larger or smaller.

2. The scroll compressor (10) according to claim 1,
**characterized in that**
three, four, five, seven, eight, nine or more pins (17) are provided.

3. The scroll compressor (10) according to claim 1 or 2,
**characterized in that**
the recesses (16) and/or the pins (17), in particular the ring elements (18), are provided with or contact a nonmetallic material, preferably plastic.

4. The scroll compressor (10) according to one of the preceding claims,
**characterized in that**
the pins (17) are arranged around the axis (A) of the drive shaft (22) on at least two pitch circles (T1, T2) of varying diameters, wherein in particular the second circular segment (T2) is at least 1%, 2%, 5%, 10%, 20%, 40% or 50% larger or smaller than the first circular segment (T1).

5. The scroll compressor (10) according to one of the preceding claims,
**characterized by**
a stator (32) that envelops the drive shaft (22) and in particular has twelve stator grooves, a rotor (33) with in particular ten rotor pole pairs, and preferably seven pins (17).

6. The scroll compressor (10) according to claim 5,
**characterized in that**
the number of stator grooves or rotor pole pairs can only be divided by the number of pins (17) with a remainder.

7. A motor vehicle air conditioning system,
**characterized by**
a scroll compressor (10) according to one of claims 1 to 6.

8. A motor vehicle,
**characterized by**
a motor vehicle air conditioning system according to claim 7.

9. The motor vehicle according to claim 8,
which has an at least partially electric vehicle drive.

## Revendications

1. Compresseur à spirales (10), comprenant un carter (11) doté d'un couvercle (12) de carter et d'une paroi intermédiaire (13) de carter, une unité d'entraînement (21) électrique, qui est reliée par un arbre d'entraînement (22) comportant un axe (A) avec un palier excentrique (23), une spirale à déplacement positif (14) mobile, reliée de manière rotative autour d'un axe (EA) avec le palier excentrique (23) et une contre-spirale (15) fixe, qui est en engagement avec la spirale à déplacement positif (14) ;
- la paroi intermédiaire (13) de carter et la spirale à déplacement positif (14) étant disposées sur un côté aspiration (SA) et le couvercle (12) de carter et la contre-spirale (15) étant placés sur un côté haute-pression (HD),
- sur le côté de la spirale à déplacement positif (14) qui fait face au côté aspiration (SA) étant conçus plusieurs évidements (16) cylindriques et
- sur le côté de la paroi intermédiaire (13) de carter qui fait face au côté haute-pression (HD), des tiges (17) étant placées de sorte à saillir à l'intérieur des évidements (16) cylindriques et à coopérer avec ceux-ci, de manière à constituer un guidage pour la spirale à déplacement positif (14) mobile et de préférence,
- dans les évidements (16) cylindriques étant placé chaque fois un élément annulaire (18) entourant la tige (17)
**caractérisé en ce que**
les tiges (17) définissent un polygone (P) imaginaire, au moins un angle intérieur (W1, W2, W3, W4, W5, W6) du polygone (P) se différenciant d'un autre des angles intérieurs (W1, W2, W3, W4, W5, W6),
une paire (26 à 31) de tiges voisines (17) définissant un angle (S1 à S6) de paire de tiges autour de l'axe (A) de l'arbre d'entraînement (22), l'angle (S1 à S6) de paire de tiges d'une paire (26 à 31) se différenciant de l'angle (S1 à S6) de paire de tiges d'au moins une autre paire (26 à 31), notamment étant plus grand ou plus petit d'au moins 1 %, 2 %, 5 %, 10 %, 20 %, 40 % ou 50 %.

2. Compresseur à spirale (10) selon la revendication 1,
**caractérisé en ce que**
trois, quatre, cinq, sept, huit, neuf tiges (17) ou plus sont prévues.

3. Compresseur à spirale (10) selon la revendication 1 ou 2,
**caractérisé en ce que**
les évidements (16) et / ou les tiges (17), notamment les éléments annulaires (18) sont muni(e)s d'une matière non métallique, de manière préférentielle d'une matière plastique ou sont en contact avec celle-ci.

4. Compresseur à spirale (10) selon l'une quelconque des revendications précédentes,
**caractérisé en ce que**
les tiges (17) sont placées sur au moins deux cercles primitifs (T1, T2) de diamètre de grandeur différente autour de l'axe (A) de l'arbre d'entraînement (22), notamment le deuxième cercle primitif (T2) étant plus grand ou plus petit d'au moins 1 %, 2 %, 5 %, 10 %, 20 %, 40 % ou 50 % que le premier cercle primitif (T1).

5. Compresseur à spirale (10) selon l'une quelconque des revendications précédentes,
**caractérisé par**
un stator (32) entourant l'arbre d'entraînement (22), comportant notamment douze encoches de stator, un rotor (33) doté notamment de dix paires de pôles de rotor et de préférence sept tiges (17).

6. Compresseur à spirale (10) selon la revendication 5,
**caractérisé en ce que**
le nombre d'encoches de stator ou de paires de pôles de rotor n'est divisible par le nombre de tiges (17) qu'avec un reste.

7. Climatisation de véhicule,
**caractérisée par**
un compresseur à spirale (10) selon l'une quelconque des revendications 1 à 6.

8. Véhicule automobile,
**caractérisé par**
une climatisation de véhicule selon la revendication 7.

9. Véhicule automobile selon la revendication 8,
lequel comporte un entraînement de véhicule au moins partiellement électrique.
